(19) Europäisches Patentamt
European Patent Office
Office européen des brevets

(11) **EP 2 125 474 B1**

(12) **EUROPÄISCHE PATENTSCHRIFT**

(45) Veröffentlichungstag und Bekanntmachung des Hinweises auf die Patenterteilung:
**24.07.2013 Patentblatt 2013/30**

(21) Anmeldenummer: **08717420.7**

(22) Anmeldetag: **05.03.2008**

(51) Int Cl.:
*B60W 10/02* (2006.01) *B60W 10/06* (2006.01)
*B60W 10/11* (2012.01) *B60W 10/184* (2012.01)
*B60W 30/18* (2012.01) *B60T 7/12* (2006.01)

(86) Internationale Anmeldenummer:
**PCT/EP2008/052670**

(87) Internationale Veröffentlichungsnummer:
**WO 2008/113689 (25.09.2008 Gazette 2008/39)**

(54) **VERFAHREN ZUR ANFAHRSTEUERUNG EINES KRAFTFAHRZEUGS**

METHOD FOR STARTING CONTROL OF A MOTOR VEHICLE

PROCÉDÉ POUR COMMANDER LE DÉMARRAGE D'UN VÉHICULE AUTOMOBILE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **16.03.2007 DE 102007012788**

(43) Veröffentlichungstag der Anmeldung:
**02.12.2009 Patentblatt 2009/49**

(73) Patentinhaber: **ZF Friedrichshafen AG
88038 Friedrichshafen (DE)**

(72) Erfinder: **MAIR, Roland
88069 Tettnang (DE)**

(56) Entgegenhaltungen:
EP-A- 1 447 261    EP-A- 1 584 531
DE-A1- 10 065 589    DE-A1- 10 103 713
DE-A1- 10 244 024    DE-A1- 19 950 034
US-A1- 2006 079 377    US-B1- 6 411 881

**Beschreibung**

Die Erfindung betrifft ein Verfahren zur Anfahrsteuerung eines Kraftfahrzeugs, dessen Antriebsstrang einen als Verbrennungsmotor ausgebildeten und außer über ein Fahrpedal auch automatisiert ansteuerbaren Antriebsmotor, eine als automatisierte Reibungskupplung ausgebildete Anfahrkupplung, ein Getriebe mit verstellbarer Übersetzung sowie eine als druckmittelbetätigte Reibungsbremse ausgebildete und außer über ein Bremspedal auch automatisiert ansteuerbare Betriebsbremse umfasst, wobei in einem Anfahrmodus einer Anfahrassistentensteuerung, der bei Fahrzeugstillstand, laufendem Antriebsmotor, geöffneter Anfahrkupplung, eingestellter Anfahrübersetzung und einer über das Bremspedal betätigten Betriebsbremse aktivierbar ist, bei einem Loslassen des Bremspedals die Betriebsbremse durch ein Halten des zuvor über das Bremspedal eingestellten Bremsdruckes zunächst geschlossen bleibt und bei einer anschließenden Betätigung des Fahrpedals das Motormoment des Antriebsmotors angehoben, das Kupplungsmoment der Anfahrkupplung durch ein Einrücken der Anfahrkupplung erhöht und das Bremsmoment der Betriebsbremse durch ein Absenken des Bremsdruckes reduziert wird.

Das Anfahren eines Kraftfahrzeugs stellt generell einen schwierigen Betriebsvorgang dar, weil dabei drei an sich unabhängige Steuerungsabläufe hinsichtlich ihres zeitlichen Ablaufs und ihrer Dosierung miteinander koordiniert werden müssen. Es handelt sich dabei um den Aufbau eines für den Anfahrvorgang erforderlichen Drehmomentes in dem Antriebsmotor, um das Einrücken der Anfahrkupplung zur Übertragung des für den Anfahrvorgang erforderlichen Drehmomentes und um das Öffnen der Betriebsbremse zur Reduzierung und Aufhebung eines zuvor eingestellten Bremsmomentes. Laufen diese drei Steuerungsabläufe schlecht koordiniert ab, so hat dies Komforteinbußen, insbesondere einen Anfahrruck beim Anrollen des Kraftfahrzeugs, einen erhöhten Verschleiß, insbesondere an den Reibelementen der Anfahrkupplung, und erhöhte Umweltbelastungen, wie einen erhöhten Kraftstoffverbrauch sowie erhöhte Lärm- und Abgasemissionen, zur Folge. Besonders kritisch ist das Anfahren eines Kraftfahrzeugs am Berg bzw. an einer Steigungsstrecke, da es hierbei bei schlecht koordinierten Steuerungsabläufen zusätzlich zu einem unerwünschten und gegebenenfalls gefährlichen Zurückrollen des Kraftfahrzeugs entgegen der gewählten Fahrtrichtung kommen kann.

Um einen Fahrer von der schwierigen Steuerungsaufgabe des Anfahrens zu entlasten sind insbesondere für den Einsatz in schweren Nutzfahrzeugen, wie Lastkraftwagen und Bussen, Vorrichtungen und Verfahren vorgeschlagen und entwickelt worden, die allgemein als Anfahrassistent bezeichnet werden und durch die die Koordinierung der erforderlichen Steuerungsabläufe weitgehend automatisiert erfolgt.

Das Funktionsprinzip der meisten bekannten Anfahrassistentensteuerungen besteht darin, dass in einem Anfahrmodus, der bei Fahrzeugstillstand, laufendem Antriebsmotor, geöffneter Anfahrkupplung, eingelegtem Anfahrgang und über das Bremspedal betätigter Betriebsbremse aktivierbar ist, der vom Fahrer über das Bremspedal eingestellte Bremsdruck der Betriebsbremse zunächst gehalten wird, ohne dass der Fahrer das Bremspedal weiter betätigen muss. Lässt der Fahrer das Bremspedal los und betätigt innerhalb einer vorgegebenen Zeitspanne das Fahrpedal, so wird das Motormoment des Antriebsmotors proportional zum Stellweg und gegebenenfalls zur Stellgeschwindigkeit des Fahrpedals erhöht und zugleich die Anfahrkupplung entsprechend in Schließrichtung betätigt.

Wird dabei ein Stellweg der Anfahrkupplung erreicht, in der das gemessene oder rechnerisch bestimmte Kupplungsmoment zumindest dem für das Halten des Kraftfahrzeugs erforderlichen Haltemoment oder einem höheren Drehmoment entspricht, so wird ein Steuersignal zum Lösen der Betriebsbremse ausgesendet und die Betriebsbremse durch ein Absenken des Bremsdruckes gelöst. Das Kraftfahrzeug setzt sich daraufhin in Bewegung und der Anfahrmodus wird mit dem vollständigen Einrücken der Anfahrkupplung oder mit der Überschreitung einer Mindestfahrgeschwindigkeit beendet. Betätigt der Fahrer innerhalb der vorgegebenen Zeitspanne das Bremspedal und/oder das Fahrpedal nicht, so wird der Anfahrmodus ebenfalls beendet und die Betriebsbremse gelöst, ohne dass ein Anfahrvorgang stattgefunden hat.

Ein entsprechendes Verfahren zum Verhindern eines unbeabsichtigten Wegrollens eines stillstehenden Fahrzeugs ist aus der DE 102 44 024 A1 bekannt. Bei diesem Verfahren ist bei aktivierter Haltefunktion während eines Anfahrvorgangs vorgesehen, dass die Betriebsbremse bei Erreichen eines bestimmten Stellweges der Anfahrkupplung gelöst wird, wobei der betreffende Stellweg entweder fest vorgegeben ist oder aus dem aktuell erforderlichen Haltemoment abgeleitet wird. Das Haltemoment wird aus dem Fahrwiderstand bestimmt, in den das aktuelle Fahrzeuggewicht und die Fahrbahnsteigung eingehen. Die Betriebsbremse wird somit erst gelöst, wenn die Anfahrkupplung bereits ein solches Antriebsmoment überträgt, das für das Halten des Kraftfahrzeugs an einer Steigung ausreicht. Das von der Anfahrkupplung übertragene Antriebsmoment, welches zur Ermöglichung einer Anfahrbeschleunigung im weiteren Verlauf noch erhöht wird, arbeitet somit bis zum vollständigen Lösen der Betriebsbremse gegen das Bremsmoment der Betriebsbremse an, was zu einem erhöhten Verschleiß an der Anfahrkupplung und zu einem unkomfortablen Anfahrruck führt. Wenn innerhalb eines vorgegebenen Zeitraumes kein Fußpedal (Bremspedal oder Fahrpedal) betätigt wird, so wird die Betriebsbremse ebenfalls gelöst und die Haltefunktion beendet. Die EP 1447261 A1 offenbart ein Verfahren gemäß Oberbegriff des Anspruchs 1.

Ein ähnliches Verfahren zum Verhindern eines Wegrollens eines Kraftfahrzeugs ist in der DE 10 2004 045 434 A1 beschrieben. In diesem bekannten Verfahren ist vorgesehen, dass die Betriebsbremse in Abhängigkeit von dem Wert einer Messgröße und/oder einer abgespeicherten Kenngröße gelöst wird. Bei der Messgröße handelt es sich bevorzugt um einen Wert des über die Anfahrkupplung und/oder das Getriebe übertragenen Antriebsmomentes, das für einen Anfahrvorgang ohne ein Zurückrollen des Kraftfahrzeugs ausreichend ist. Bei der Kenngröße handelt es sich bevorzugt um eine Zeitspanne, nach deren Ablauf die Betriebsbremse ebenfalls gelöst wird, wenn innerhalb dieser Zeitspanne keine erneute Betätigung des Bremspedals stattgefunden hat. Das Lösen der Betriebsbremse erfolgt jeweils derart, dass der Bremsdruck ab einem festgelegten Druckwert mit einem konstanten Druckgradienten abgebaut wird.

Ein weiteres Verfahren zur Anfahrhilfe eines Kraftfahrzeugs ist in der DE 10 2004 017 703 A1 offenbart. Bei diesem bekannten Verfahren wird das von der Anfahrkupplung übertragene Kupplungsmoment rechnerisch bestimmt und eine Standbremse, bei der es sich entweder um die Betriebsbremse oder um eine zusätzliche Bremseinrichtung handeln kann, dann gelöst, wenn das rechnerisch bestimmte Kupplungsmoment gleich oder größer dem von dem Fahrer über den Bremsdruck eingestellten Bremsmoment oder dem für eine gewünschte Anfahrbeschleunigung erforderlichen Anfahrmoment ist. Das Lösen der Standbremse erfolgt bevorzugt durch eine rampenförmige Absenkung des Bremsdruckes, also durch eine Absenkung des Bremsdruckes mit einem konstanten Druckgradienten.

Da das von dem Fahrer über die Betätigung des Bremspedals eingestellte Bremsmoment und das für eine bestimmte Anfahrbeschleunigung erforderliche Anfahrmoment zumeist deutlich über dem zum Halten des Kraftfahrzeugs an einer Steigung erforderlichen Haltemoment liegt, kann damit zwar ein Zurückrollen des Kraftfahrzeugs an einer Steigung sicher verhindert werden. Während des Einrückens der Anfahrkupplung und dem Öffnen der Standbremse arbeitet die Anfahrkupplung aber permanent gegen die Standbremse an, was mit einem erhöhten Verschleiß an der Anfahrkupplung und mit einem unkomfortablen Anfahrruck verbunden ist.

Schließlich ist aus der DE 10 2005 001 550 A1 noch ein Verfahren zur Anfahrsteuerung eines Kraftfahrzeugs bekannt. In diesem Verfahren ist vorgesehen, dass der Einrückungsgrad bzw. der Stellweg der Anfahrkupplung, bei dem das Signal zum Lösen der Betriebsbremse ausgesendet wird, aus der Reaktion von Antriebsstrangaktuatoren, wie eines Kupplungsstellers der Anfahrkupplung und/oder eines Leistungsstellers des Antriebsmotors, auf den Stellweg und/oder die Stellgeschwindigkeit des Fahrpedals bestimmt wird. Aus der jeweils bekannten Abweichung zwischen Istwerten und Sollwerten z.B. des Stellweges oder der Stellgeschwindigkeit der Anfahrkupplung und/oder des Motormomentes oder der Drehzahl des Antriebsmotors kann der Einrückungsgrad bzw. der Stellweg, bei dem das Signal zum Lösen der Betriebsbremse ausgesendet wird, genauer bestimmt werden und somit eine größere Abweichung des übertragenen Antriebsmomentes von einem Sollwert zum Zeitpunkt der vollständig gelösten Betriebsbremse vermieden werden. Der prinzipielle Nachteil, dass das Signal zum Lösen der Betriebsbremse erst ausgesendet wird, wenn an der Anfahrkupplung schon ein relativ hohes Drehmoment anliegt, das gegen die zu diesem Zeitpunkt noch vollständig geschlossene Betriebsbremse wirksam ist, bleibt aber erhalten.

Zusammenfassend ist festzustellen, dass in den bekannten Verfahren zur Anfahrsteuerung eines Kraftfahrzeugs das Signal zum Lösen der Betriebsbremse erst erteilt wird, wenn die Anfahrkupplung bereits ein relativ hohes Antriebsmoment überträgt, das mindestens dem für ein Halten des Kraftfahrzeugs an einer Steigung momentan erforderlichen Haltemoment entspricht. Danach werden simultan das Motormoment des Antriebsmotors und das Kupplungsmoment der Anfahrkupplung zur Ermöglichung einer Anfahrbeschleunigung weiter erhöht und das Bremsmoment der Betriebsbremse durch den Abbau des zuvor eingeschlossenen Bremsdruckes reduziert. Das Kupplungsmoment arbeitet somit bis zum vollständigen Lösen der Betriebsbremse gegen das Bremsmoment an, welches mit den bekannten Nachteilen verbunden ist.

Auch werden die Höhe des anfänglichen, durch den eingeschlossenen Bremsdruck der Betriebsbremse bestimmten Bremsmomentes und der Funktionsverlauf, mit dem das Bremsmoment nach der Erteilung des Signals zum Lösen der Betriebsbremse abgebaut wird, beim Einrücken der Anfahrkupplung nur unzureichend oder gar nicht berücksichtigt. Ebenfalls beinhalten die bekannten Verfahren keine praktikable Möglichkeit für ein gelegentlich von einem Fahrer gewünschtes sanftes Anfahren oder Halten des Kraftfahrzeugs mit der Anfahrkupplung bei jeweils geringer Auslenkung des Fahrpedals. Wenn sich das Kraftfahrzeug an einer in Fahrtrichtung abfallenden Gefällstrecke befindet, so ist mit den bekannten Verfahren ein Anfahren über ein vom Fahrer über das Bremspedal gesteuertes Lösen der Betriebsbremse ohne ein vorheriges Loslassen des Bremspedals und Abwarten einer festgelegten Zeitspanne oder ohne eine vorherige Betätigung des Fahrpedals nicht möglich.

Vor diesem Hintergrund liegt der vorliegenden Erfindung die Aufgabe zugrunde, ein Verfahren zur Anfahrsteuerung eines Kraftfahrzeugs der eingangs genannten Art vorzuschlagen, mit dem ein Anfahrvorgang unter Vermeidung eines Zurückrollens an einer Steigung komfortabler und verschleißärmer durchführbar ist.

Die Erfindung geht aus von einem Verfahren zur Anfahrsteuerung eines Kraftfahrzeugs, dessen Antriebsstrang einen als Verbrennungsmotor ausgebildeten und außer über ein Fahrpedal auch automatisiert ansteuerbaren Antriebsmotor, eine als automatisierte Reibungskupplung ausgebildete Anfahrkupplung, ein Getriebe mit verstellbarer Übersetzung sowie eine als druckmittelbetätigte Reibungsbremse ausgebildete und außer über ein Bremspedal auch automatisiert ansteuerbare Betriebsbremse umfasst, wobei in einem Anfahrmodus einer Anfahrassistentensteuerung, der bei Fahrzeugstillstand, laufendem Antriebsmotor, geöffneter Anfahrkupplung, eingestellter Anfahrübersetzung und einer über das Bremspedal betätigten Betriebsbremse aktivierbar ist, bei einem Loslassen des Bremspedals die Betriebsbremse durch ein Halten des zuvor über das Bremspedal eingestellten Bremsdruckes $p_B$ zunächst geschlossen bleibt und bei einer anschließenden Betätigung des Fahrpedals das Motormoment $M_M$ des Antriebsmotors angehoben, das Kupplungsmoment $M_K$ der Anfahrkupplung durch ein Einrücken der Anfahrkupplung erhöht und das Bremsmoment $M_B$ der Betriebsbremse durch ein Absenken des Bremsdruckes $p_B$ reduziert wird.

Erfindungsgemäß ist nach den kennzeichnenden Merkmalen des Hauptanspruchs außerdem vorgesehen, dass ein durch den Fahrer über das Bremspedal eingestelltes Bremsmoment $M_B$, ein durch den Fahrer über das Fahrpedal angefordertes Beschleunigungsmoment $M_A$ und ein für das Halten des Kraftfahrzeugs an einer Steigung erforderliches Haltemoment $M_H$ bestimmt werden, und dass das Einrücken der Anfahrkupplung sowie das Lösen der Betriebsbremse derart koordiniert werden, dass während des Lösens der Betriebsbremse die Summe aus dem Kupplungsmoment $M_K$ und dem Bremsmoment $M_B$ zu jedem Zeitpunkt dem Haltemoment $M_H$ entspricht ($M_K + M_B = M_H$), und das Kupplungsmoment $M_K$ der Anfahrkupplung erst bei weitgehend gelöster Betriebsbremse ($M_B = 0$) um das Beschleunigungsmoment $M_A$ erhöht wird.

Vorteilhafte Ausgestaltungen und Weiterbildungen des erfindungsgemäßen Verfahrens sind in den Ansprüchen 2 bis 15 angegeben und werden weiter unten erläutert.

Dem erfindungsgemäßen Verfahren liegt die Erkenntnis zugrunde, dass ein Anfahrvorgang ohne einen starken Verschleiß, insbesondere an der Anfahrkupplung, aber auch an der Betriebsbremse und an anderen Bauteilen des Antriebsstrangs, und ohne einen unkomfortablen Anfahrruck erfolgen kann, wenn der Aufbau des Kupplungsmomentes $M_K$ der Anfahrkupplung und der Abbau des Bremsmomentes $M_B$ der Betriebsbremse derart zueinander koordiniert werden, dass die Summe beider Momente gerade dem für das Halten des Kraftfahrzeugs an einer Steigung momentan erforderlichen Haltemoment $M_H$ entspricht. Unter der Voraussetzung, dass das Motormoment $M_M$ des Antriebsmotor automatisch an das in der Anfahrkupplung eingestellte Kupplungsmoment $M_K$ angepasst wird, steigt das von der Anfahrkupplung übertragene Antriebsmoment genau in dem Maße an, wie das Bremsmoment $M_B$ der Betriebsbremse durch das Absenken des Bremsdruckes $p_B$ abnimmt. Beide Momente ($M_K$, $M_B$) werden somit zunächst umgekehrt proportional zueinander gesteuert, bis das Bremsmoment $M_B$ weitgehend abgebaut ist. Erst danach wird das Kupplungsmoment $M_K$ um das Beschleunigungsmoment $M_A$ und selbstverständlich das Motormoment $M_M$ des Antriebsmotors in gleichem Umfang erhöht, um die von dem Fahrer über die Auslenkung des Fahrpedals angeforderte Anfahrbeschleunigung des Kraftfahrzeugs zu erzeugen.

Zur entsprechenden Steuerung des Anfahrvorgangs ist die Kenntnis der durch äußere Einflüsse bestimmten Momente, wie des Haltemomentes $M_H$ und des Beschleunigungsmomentes $M_A$, und der Momentanwerte des Kupplungsmomentes $M_K$ sowie des Bremsmomentes $M_B$ erforderlich, die zur Vergleichbarkeit zweckmäßig auf eine gemeinsame Ebene bezogen werden, bei der es sich bevorzugt um die Ebene der Anfahrkupplung handelt.

Während bei einer automatisierten Anfahrkupplung, von der hier ausgegangen wird, das aktuelle Kupplungsmoment $M_K$ jeweils in an sich bekannter Weise aus Kennfeldern als Funktion einer bestimmten Stellgröße, wie z.B. dem Einrückweg $x_K$ bei einer Trockenkupplung und dem Einrückdruck $p_K$ bei einer Nasskupplung, ermittelbar ist, müssen die übrigen Momente direkt gemessen oder aus bestimmten Messwerten berechnet werden.

Zur Bestimmung des Bremsmomentes $M_B$ wird bevorzugt der Bremsdruck $p_B$ der Betriebsbremse sensorisch erfasst und daraus mit der Geometrie der Radbremsen ein resultierendes Radbremsmoment $M_{BR}$ berechnet, aus dem mittels der resultierenden Übersetzung $i_D$ eines Achs- und/oder Zentraldifferenzials und der Übersetzung $i_G$ des Getriebes das auf die Ebene der Anfahrkupplung bezogene Bremsmoment $M_B$ berechnet wird. Das Radbremsmoment $M_{BR}$ und das auf die Ebene der Anfahrkupplung bezogene Bremsmoment $M_B$ ergeben sich somit durch die Gleichungen

$$M_{BR} = n_{BR} * \mu_B * p_B * A_B * r_B$$

und

$$M_B = M_{BR} / (i_D * i_G) = n_{BR} * \mu_B * p_B * A_B * r_B / (i_D * i_G),$$

wobei $n_{BR}$ die Anzahl der Radbremsen, $\mu_B$ den durchschnittlichen Reibungskoeffizienten der Radbremsen, $A_B$ die mittlere Reibfläche der Radbremsen und $r_B$ den mittleren Wirkradius der Radbremsen bedeuten.

Zur Bestimmung des Beschleunigungsmomentes $M_A$ wird bevorzugt die Stellung $x_{FP}$ und/oder die Stellgeschwindigkeit $d\,x_{FP}/dt$ des Fahrpedals sensorisch erfasst, daraus eine angeforderte Fahrzeugbeschleunigung $a_F$ abgeleitet, und damit zusammen mit einer ermittelten Fahrzeugmasse $m_F$ eine Beschleunigungskraft $F_A$ berechnet, aus der mit dem wirksamen Radius $r_R$ der Antriebsräder, der resultierenden Übersetzung $i_D$ des Achs- und/oder Zentraldifferenzials und der Übersetzung $i_G$ des Getriebes das auf die Ebene der Anfahrkupplung bezogene Beschleunigungsmoment $M_A$ berechnet wird. Während die Fahrzeugbeschleunigung $a_F$ als Funktion des Stellweges $x_{FP}$ und/oder der Stellgeschwindigkeit d $x_{FP}$/dt des Fahrpedals aus entsprechenden Kennfeldern ermittelt wird, ergeben sich die daraus ableitbare Beschleunigungskraft $F_A$ und das Beschleunigungsmoment $M_A$ durch die Gleichungen

$$F_A = m_F * a_F$$

und

$$M_A = F_A * r_R / (i_D * i_G) = m_F * a_F * r_R / (i_D * i_G).$$

Zur Bestimmung des Haltemomentes $M_H$ wird bevorzugt die Fahrbahnneigung $\alpha$ und die Fahrzeugmasse $m_F$ ermittelt, daraus ein Steigungswiderstand $F_S$ berechnet, und damit zusammen mit einem ermittelten Rollwiderstand $F_R$ ein Fahrwiderstand $F_W$ berechnet, aus dem mittels des Radius $r_R$ der Antriebsräder, der resultierenden Übersetzung $i_D$ des Achs- und/oder Zentraldifferenzials und der Übersetzung $i_G$ des Getriebes das auf die Ebene der Anfahrkupplung bezogene Haltemoment $M_H$ berechnet wird. Für die Bestimmung der Fahrbahnneigung $\alpha$ und der Fahrzeugmasse $m_F$ stehen bereits mehrere bekannte Verfahren zur Verfügung. Demzufolge können der Neigungswinkel $\alpha$ der Fahrbahn mittels eines Längsneigungssensors oder aus den Daten eines Navigationssystems, die Fahrzeugmasse $m_F$ mit der bekannten Leermasse des Kraftfahrzeugs mittels eines oder mehrerer Beladungssensoren, und beide Werte aus dem Fahrverhalten des Kraftfahrzeugs in einem zurückliegenden Fahrzyklus oder aus statischen Messwerten von Fahrwerkssensoren bestimmt werden. Der Rollwiderstand $F_R$ ist bei kleiner Fahrgeschwindigkeit weitgehend konstant und kann in Form eines konstanten Offsetwertes zu dem Steigungswiderstand $F_S$ berücksichtigt werden. Der Fahrwiderstand $F_W$ und das Haltemoment $M_H$ ergeben sich demnach aus den Gleichungen

$$F_W = F_S + F_R = m_F * g * \sin \alpha + F_R,$$

und

$$M_H = F_W * r_R / (i_D * i_G) = (m_F * g * \sin \alpha + F_R) * r_R / (i_D * i_G),$$

wobei g die Erdbeschleunigung mit 9,81 m/s und sin $\alpha$ der Sinus des bei in Fahrtrichtung ansteigender Fahrbahn positiven Neigungswinkels $\alpha$ der Fahrbahn bedeuten.

Wird ein Kraftfahrzeug durch die Betätigung des Bremspedals bis zum Stillstand verzögert oder nach der Inbetriebnahme des Kraftfahrzeugs über eine Betätigung des Bremspedals an einer Steigung gehalten, so ist der über das Bremspedal eingestellte Bremsdruck $p_B$ in der Regel deutlich höher als es für ein Halten des Kraftfahrzeugs nötig ist. Dies bedeutet, dass das aktuelle Bremsmoment $M_B$ der Betriebsbremse zu Beginn eines Anfahrvorgangs zumeist deutlich höher ist als das zum Halten des Kraftfahrzeugs an der Steigung momentan erforderliche Haltemoment $M_H$. Würde in diesem Fall das Einrücken der Anfahrkupplung und das Lösen der Betriebsbremse beim Anfahren gleichzeitig beginnen, so würde die Anfahrkupplung zunächst gegen das relativ hohe Bremsmoment $M_B$ der Betriebsbremse anarbeiten, welches mit einem unnötig hohen Verschleiß insbesondere der Reibelemente der Anfahrkupplung verbunden wäre. Es ist daher vorteilhaft, wenn bei einem zu Beginn des Anfahrvorgangs über dem Haltemoment $M_H$ liegenden Bremsmoment $M_B$ ($M_B > M_H$) das Einrücken der Anfahrkupplung so lange verzögert wird, bis der Bremsdruck $p_B$ der Betriebsbremse soweit abgesenkt ist, dass das aktuelle Bremsmoment $M_B$ in etwa dem Haltemoment $M_H$ entspricht ($M_B = M_H$).

Während dieser Verzögerung des Einrückens kann die Anfahrkupplung jedoch schon bis an den Greifpunkt eingerückt werden, so dass eine nachfolgende Verzögerung im Ansprechverhalten der Anfahrkupplung, die bei einer Trockenkupplung durch die Überbrückung eines Leerweges bis zum Anlegen der Reibscheiben an die Mitnehmerscheibe und bei einer Lamellenkupplung durch die Überbrückung eines Leerweges bis zum Anlegen der Lamellen sowie bei beiden Kupplungsbauarten durch eine Vorbefüllung eines hydraulischen oder pneumatischen Stellzylinders bedingt ist, vermieden werden kann.

Um den Steuerungsaufwand möglichst gering zu halten, kann zweckmäßig vorgesehen sein, dass die Anfahrkupplung nach einem vorgegebenen zeitbezogenen Funktionsverlauf eingerückt wird, und dass das Kupplungsmoment $M_K$ der Anfahrkupplung oder eine die Höhe des Kupplungsmomentes $M_K$ bestimmende Stellgröße als Führungsgröße zur Steuerung des Abbaus des Bremsmomentes $M_B$ der Betriebsbremse verwendet wird. Dies bedeutet, dass die Anfahrkupplung unabhängig von anderen Steuerungsvorgängen, insbesondere von dem momentan eingestellten Bremsmoment $M_B$ der Betriebsbremse, eingerückt wird, und dass die Betriebsbremse abhängig von dem momentan eingestellten Kupplungsmoment $M_K$ derart gelöst wird, dass die Summe aus beiden Momenten ($M_B + M_K$) dem Haltemoment $M_H$ ($M_B + M_K = M_H$) entspricht.

Da die Bestimmung des momentanen Kupplungsmomentes $M_K$ einen gewissen rechnerischen und/oder sensorischen Aufwand erfordert, wird bevorzugt bei einer als Trockenkupplung ausgebildeten Anfahrkupplung der Einrückweg $x_K$ und bei einer als Nasskupplung ausgebildeten Anfahrkupplung der Einrückdruck $p_K$ als Führungsgröße für den Abbau des Bremsmomentes $M_B$ der Betriebsbremse verwendet.

Da die Ermittlung und Einstellung des richtigen Wertes des Bremsmomentes $M_B$ mit gewissen Unsicherheiten verbunden ist, wird während des Abbaus des Bremsmomentes $M_B$ der Bremsdruck $p_B$ der Betriebsbremse zweckmäßig um einen Sicherheitszuschlag $\Delta p_{BS}$ erhöht, so dass ein unerwünschtes Zurückrollen des Kraftfahrzeugs sicher verhindert wird.

Alternativ dazu kann zur Reduzierung des Steuerungsaufwands jedoch auch die Betriebsbremse nach einem vorgegebenen zeitbezogenen Funktionsverlauf gelöst werden, und das Bremsmoment $M_B$ oder eine die Höhe des Bremsmomentes $M_B$ bestimmende Stellgröße als Führungsgröße zur Steuerung des Aufbaus des Kupplungsmomentes $M_K$ der Anfahrkupplung verwendet werden. Dies bedeutet, dass die Betriebsbremse unabhängig von dem momentan eingestellten Kupplungsmoment $M_K$ der Anfahrkupplung ausgerückt wird, und dass die Anfahrkupplung abhängig von dem momentan eingestellten Bremsmoment $M_B$ derart eingerückt wird, dass die Summe aus beiden Momenten ($M_B + M_K$) dem Haltemoment $M_H$ entspricht.

Um hierbei eine sensorische Erfassung oder eine Berechnung des Bremsmomentes $M_B$ zu vermeiden, wird bevorzugt der Bremsdruck $p_B$ der Betriebsbremse als Führungsgröße für den Aufbau des Kupplungsmomentes $M_K$ der Anfahrkupplung verwendet.

Da die Ermittlung und Einstellung des richtigen Wertes des Kupplungsmomentes $M_K$ mit gewissen Unsicherheiten verbunden ist, wird während des Aufbaus des Kupplungsmomentes $M_K$ bei einer als Trockenkupplung ausgebildeten Anfahrkupplung zweckmäßig der Einrückweg $x_K$ und bei einer als Nasskupplung ausgebildeten Anfahrkupplung zweckmäßig der Einrückdruck $p_K$ um einen Sicherheitszuschlag $\Delta x_{KS}$ bzw. $\Delta p_{KS}$ erhöht, so dass ein unerwünschtes Zurückrollen des Kraftfahrzeugs sicher verhindert wird.

Der jeweilige Sicherheitszuschlag ($\Delta p_{BS}$, $\Delta x_{KS}$, $\Delta p_{KS}$) kann zwar auch über den Anfahrvorgang konstant gehalten werden. Da die Unsicherheit über die Höhe der Summe aus Bremsmoment $M_B$ und Kupplungsmoment $M_K$ ($M_B + M_K$) aber gegen Ende des Einrückvorgangs der Anfahrkupplung kleiner wird, ist gemäß einer bevorzugten Weiterbildung vorgesehen, dass der verwendete Sicherheitszuschlag ($\Delta p_{BS}$, $\Delta x_{KS}$, $\Delta p_{KS}$) mit zunehmendem Kupplungsmoment $M_K$ der Anfahrkupplung oder mit zunehmender, die Höhe des Kupplungsmomentes $M_K$ bestimmender Stellgröße ($x_K$, $p_K$) reduziert wird. Hierdurch ist sichergestellt, dass das Kupplungsmoment $M_K$ am Ende des Einrückvorgangs der Anfahrkupplung exakt dem Haltemoment $M_H$ entspricht, so dass bei einem entsprechend gering ausgelenkten Fahrpedal auch ein Halten des Kraftfahrzeugs an einer Steigung nur mit dem Fahrpedal möglich ist und bei einem stärker ausgelenkten Fahrpedal ein Anrucken des Fahrzeugs vermieden wird.

Damit der abhängig gesteuerte Vorgang dem unabhängig gesteuerten Vorgang folgen kann und der Anfahrvorgang nicht unnötig verzögert wird, ist zweckmäßig vorgesehen, dass von den Vorgängen "Aufbau des Kupplungsmomentes $M_K$ der Anfahrkupplung" und "Abbau des Bremsmomentes $M_B$ der Betriebsbremse" der langsamer steuerbare Vorgang nach einem vorgegebenen zeitbezogenen Funktionsverlauf, also unabhängig von anderen Steuerungsvorgängen, und der schneller steuerbare Vorgang in Abhängigkeit des langsamer steuerbaren Vorgangs gesteuert wird.

Wird bei der Ermittlung des Fahrwiderstands $F_W$ festgestellt, dass dieser in die Richtung der gewählten Fahrtrichtung weist, oder, was gleichbedeutend ist, dass die Fahrbahnneigung $\alpha$ negativ bzw. abschüssig ist, so wird die Betriebsbremse gelöst und der Anfahrmodus vorzeitig beendet. Damit wird ein über das Bremspedal kontrollierbares Anrollen des Kraftfahrzeugs ermöglicht und ein für den Fahrer möglicherweise überraschend schnelles Anfahren mit dem über die Anfahrkupplung übertragenen Motormoment $M_M$ bzw. dem Kupplungsmoment $M_K$ zusammen mit der gleichgerichteten Hangabtriebskraft vermieden.

In dem Getriebe wird zweckmäßig die eingestellte Übersetzung $i_G$ sensorisch erfasst. Wird damit festgestellt, dass der Fahrer oder die automatische Getriebesteuerung in dem Getriebe eine für das Anfahren ungeeignete Übersetzung $i_G$ eingestellt, also bei einem Stufenschaltgetriebe einen ungeeigneten Gang eingelegt oder in einem stufenlosen Getriebe eine ungeeignete Übersetzung eingestellt hat, so wird ebenfalls die Betriebsbremse gelöst und der Anfahrmodus beendet, wodurch ein Zurückrollen des Kraftfahrzeugs sowie eine thermische Überlastung der Anfahrkupplung vermieden werden.

Ebenso wird zweckmäßig eine Betätigung einer Feststellbremse sensorisch erfasst. Wird damit während des aktivierten Anfahrmodus eine Betätigung der Feststellbremse registriert, kann ebenfalls die Betriebsbremse gelöst und der Anfahrmodus beendet werden. In diesem Fall ist davon auszugehen, dass der Fahrer den Anfahrvorgang durch eine simultane Betätigung des Fahrpedals und eines der Feststellbremse zugeordneten Betätigungselements, wie eines Handbremshebels, selbst koordinieren will, welches bei rutschigem Untergrund, insbesondere bei Eisglätte, gegenüber einem automatisiert gesteuerten Anfahrvorgang vorteilhaft sein kann.

Das in Verbindung mit einem vorzeitigen Abbruch des Anfahrmodus erfolgende Lösen der Betriebsbremse kann wahlweise unabhängig von einer aktuellen Betätigung des Bremspedals oder erst nach dem Loslassen des Bremspedals erfolgen. Bei dem unabhängigen Lösen der Betriebsbremse wird der Bremsdruck $p_B$ der Betriebsbremse bevorzugt bis auf einen dem aktuellen Stellweg $x_{BP}$ des Bremspedals entsprechenden Wert und bei dem nach dem Loslassen des Bremspedals erfolgenden Lösen der Betriebsbremse bevorzugt bis auf Null abgesenkt.

Damit der Fahrer aber von dem Lösen der Betriebsbremse und dem Ende des automatisiert unterstützten Anfahrvorgangs nicht überrascht wird, sollte ihm dies durch ein akustisches Signal, wie durch die Ausgabe eines Warntons aus einem Lautsprecher, und/oder durch ein optisches Signal, wie durch das Blinken einer im Blickfeld des Fahrers angeordneten Warnleuchte oder durch ein Textfeld in einem Anzeigeinstrument, angezeigt werden.

Zur Verdeutlichung der Erfindung ist der Beschreibung eine Zeichnung mit Ausführungsbeispielen beigefügt. In dieser zeigt

Fig. 1      die Zeitverläufe des Kupplungsmomentes $M_K$ und des Bremsmomentes $M_B$ bei einem erfindungsgemäß gesteuerten Anfahrvorgang und

Fig. 2      die Zeitverläufe des Kupplungsmomentes $M_K$ und des Bremsmomentes $M_B$ bei einem gegenüber Fig. 1 weitergebildet gesteuerten Anfahrvorgang.

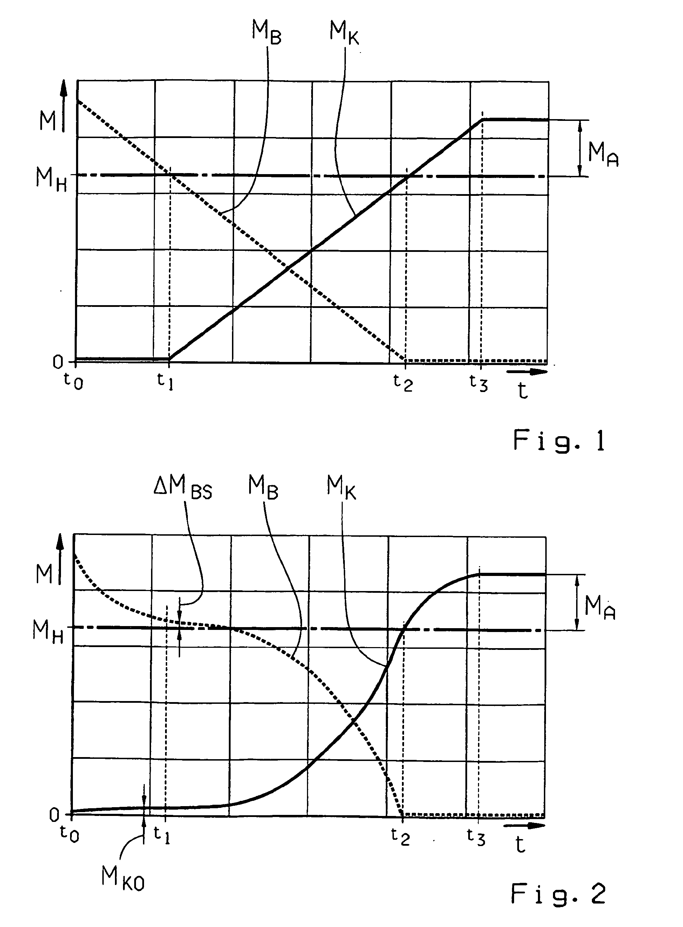

In dem Zeitdiagramm von Fig. 1 sind die Zeitverläufe des Kupplungsmomentes $M_K$ einer Anfahrkupplung und des Bremsmomentes $M_B$ einer Betriebsbremse dargestellt, wie sie sich bei einem Kraftfahrzeug während eines Anfahrvorgangs einstellen, der bei aktiviertem Anfahrmodus einer Anfahrassistentensteuerung erfindungsgemäß gesteuert abläuft. Vor dem Zeitpunkt $t_0$ ist das Kraftfahrzeug zum Stillstand gebracht oder in Betrieb genommen worden. Der Antriebsmotor läuft, die Anfahrkupplung ist geöffnet bzw. ausgerückt, in dem Getriebe ist ein Anfahrgang eingelegt bzw. eine Anfahrübersetzung eingestellt worden, und der Fahrer hat über das Bremspedal die Betriebsbremse betätigt, so dass der Anfahrmodus aktiviert ist und der in der Betriebsbremse eingestellte Bremsdruck $p_B$ nach dem Loslassen des Bremspedals zunächst gehalten wird. Mit der Betätigung des Fahrpedals durch den Fahrer zum Zeitpunkt $t_0$ beginnt der durch die Anfahrassistentensteuerung unterstützte Anfahrvorgang.

Bis zum Zeitpunkt $t_1$ bleibt die Anfahrkupplung geöffnet, d.h. das Kupplungsmoment $M_K$ ist gleich Null, und der Bremsdruck $p_1$ der Betriebsbremse wird so weit abgesenkt, dass das Bremsmoment $M_B$ der Betriebsbremse gerade demjenigen vorher ermittelten Haltemoment $M_H$ entspricht ($M_B = M_H$), das zum Halten des Kraftfahrzeugs an einer Steigung aktuell erforderlich ist. Danach wird zwischen den Zeitpunkten $t_1$ und $t_2$ koordiniert die Betriebsbremse weiter gelöst und die Anfahrkupplung eingerückt, so dass die Summe aus dem abfallenden Bremsmoment $M_B$ und dem ansteigenden Kupplungsmoment $M_K$ zu jedem Zeitpunkt dem Haltemoment $M_H$ entspricht ($M_B + M_K = M_H$).

Hierdurch wird zum einen verhindert, dass das Kraftfahrzeug entgegen der gewählten Fahrtrichtung zurückrollt, und zum anderen vermieden, dass die Anfahrkupplung mit dem jeweiligen Kupplungsmoment $M_K$ gegen die Betriebsbremse drückt, also gegen das über den momentanen Bremsdruck $p_B$ eingestellte Bremsmoment $M_B$ anarbeiten muss. Damit werden ein unnötiger Verschleiß besonders an den Reibelementen der Anfahrkupplung sowie ein unkomfortabler Anfahrruck bei weiter gelöster Betriebsbremse vermieden.

Nach dem vollständigen Lösen der Betriebsbremse zum Zeitpunkt $t_2$ wird die Anfahrkupplung weiter eingerückt, bis sich zum Zeitpunkt $t_3$ ein Beschleunigungsmoment $M_A$ eingestellt hat, das die vom Fahrer über den Stellweg $x_{FP}$ des Fahrpedals angeforderte Anfahrbeschleunigung ermöglicht. Es versteht sich in Kenntnis der Erfindung von selbst, dass simultan zu dem Einrücken der Anfahrkupplung auch das Motormoment $M_M$ des Antriebsmotors entsprechend erhöht wird, damit das in der Anfahrkupplung eingestellte Kupplungsmoment $M_K$ auch tatsächlich übertragen und über das Getriebe sowie ein Achsdifferenzialgetriebe und/oder ein Zentraldifferenzialgetriebe an die Antriebsräder weitergeleitet wird. Zur Vereinfachung der Darstellung sind die Momentenverläufe $M_B$, $M_K$ in Fig. 1 linear dargestellt.

In dem Diagramm gemäß Fig. 2 ist im Prinzip derselbe Anfahrvorgang wie in Fig. 1 dargestellt, jedoch sind dort die Momentenverläufe $M_B$, $M_K$ realitätsnäher nichtlinear dargestellt und die Steuerungsabläufe in einigen Details verbessert. Während die Betriebsbremse zwischen dem Zeitpunkt $t_0$ und dem Zeitpunkt $t_1$ progressiv bis in die Nähe des Haltemomentes $M_H$ geöffnet wird, wird die Anfahrkupplung schon bis an deren Greifpunkt geschlossen, so dass die Anfahrkupplung zum Zeitpunkt $t_1$ schon ein minimales Anfangsmoment $M_{KO}$ überträgt. Durch diese Maßnahme wird für die nachfolgende Steuerung ein schnelles Ansprechverhalten der Anfahrkupplung erzielt und eine genaue Einstellung des Kupplungsmomentes $M_K$ ermöglicht.

Nachfolgend wird die Anfahrkupplung nach einem vorab festgelegten zeitbezogenen Funktionsverlauf degressiv eingerückt, bis das Kupplungsmoment $M_K$ zum Zeitpunkt $t_2$ exakt dem Haltemoment $M_H$ entspricht ($M_K = M_H$). Zwischen dem Zeitpunkt $t_1$ und dem Zeitpunkt $t_2$ wird die Betriebsbremse abhängig von dem momentan eingestellten Kupplungsmoment $M_K$ oder einer die Höhe des Kupplungsmomentes $M_K$ bestimmenden Stellgröße, wie dem Einrückweg $x_K$ bei einer Trockenkupplung und dem Einrückdruck $p_K$ bei einer Nasskupplung, derart gelöst, dass die Summe aus dem Bremsmoment $M_B$ und dem Kupplungsmoment $M_K$ jeweils in etwa dem Haltemoment $M_H$ entspricht ($M_B + M_K = M_H$), was ebenfalls einen degressiven Verlauf des Bremsmomentes $M_B$ bewirkt.

Da die Ermittlung des exakten Kupplungsmomentes $M_K$ und die exakte Einstellung des Bremsmomentes $M_B$ mit gewissen Unsicherheiten verbunden sind, wird der an der Betriebsbremse einzustellende Bremsdruck $p_B$ um einen Sicherheitszuschlag $\Delta p_{BS}$ erhöht. Dieser Sicherheitszuschlag $\Delta p_{BS}$, der bevorzugt mit zunehmendem Kupplungsmoment $M_K$ geringer wird, bewirkt ein um den Momentenzuschlag $\Delta M_{BS}$ erhöhtes Bremsmoment $M_B$, wodurch ein unerwünschtes Zurückrollen des Kraftfahrzeugs sicher verhindert wird.

Nach dem vollständigen Lösen der Betriebsbremse zum Zeitpunkt $t_2$ wird die Anfahrkupplung progressiv weiter eingerückt, bis sich zum Zeitpunkt $t_3$ das für die Erzeugung der von dem Fahrer durch die Auslenkung des Fahrpedals angeforderten Anfahrbeschleunigung erforderliche Beschleunigungsmoment $M_A$ eingestellt hat.

<div align="center">Bezugzeichen</div>

| | |
|---|---|
| $a_F$ | Fahrzeugbeschleunigung |
| $A_B$ | mittlere Reibfläche der Radbremsen |
| $F_A$ | Beschleunigungskraft |
| $F_R$ | Rollwiderstand |
| $F_s$ | Steigungswiderstand |
| $F_W$ | Fahrwiderstand |
| $g$ | Erdbeschleunigung |
| $i_D$ | Übersetzung eines Differenzialgetriebes |
| $i_G$ | Übersetzung eines Getriebes |
| $m_F$ | Fahrzeugmasse |
| $M$ | Drehmoment |
| $M_A$ | Beschleunigungsmoment |
| $M_B$ | Bremsmoment |
| $M_{BR}$ | Radbremsmoment |
| $M_H$ | Haltemoment |
| $M_K$ | Kupplungsmoment |
| $M_{KO}$ | Anfangsmoment |
| $M_M$ | Motormoment |
| $n_{BR}$ | Anzahl der Radbremsen |
| $p_B$ | Bremsdruck der Betriebsbremse |
| $p_K$ | Einrückdruck der Anfahrkupplung |
| $r_B$ | mittlerer Wirkradius der Radbremsen |
| $r_R$ | Radradius |
| $t$ | Zeit |
| $t_0$ | Zeitpunkt |
| $t_1$ | Zeitpunkt |
| $t_2$ | Zeitpunkt |
| $t_3$ | Zeitpunkt |
| $x_{BP}$ | Stellweg des Bremspedals |
| $x_{FP}$ | Stellweg des Fahrpedals |
| $x_K$ | Einrückweg der Anfahrkupplung |
| $\alpha$ | Neigungswinkel, Fahrbahnneigung |
| $\Delta M_{BS}$ | Momentenzuschlag |
| $\Delta p_{BS}$ | Sicherheitszuschlag auf Bremsdruck |
| $\Delta p_{KS}$ | Sicherheitszuschlag auf Einrückdruck |
| $\Delta x_{KS}$ | Sicherheitszuschlag auf Einrückweg |
| $\mu_B$ | Reibungskoeffizient der Radbremsen |

**Patentansprüche**

1.  Verfahren zur Anfahrsteuerung eines Kraftfahrzeugs, dessen Antriebsstrang einen als Verbrennungsmotor ausgebildeten und außer über ein Fahrpedal auch automatisiert ansteuerbaren Antriebsmotor, eine als automatisierte Reibungskupplung ausgebildete Anfahrkupplung, ein Getriebe mit verstellbarer Übersetzung sowie eine als druckmittelbetätigte Reibungsbremse ausgebildete und außer über ein Bremspedal auch automatisiert ansteuerbare Betriebsbremse umfasst, wobei in einem Anfahrmodus einer Anfahrassistentensteuerung, der bei Fahrzeugstillstand, laufendem Antriebsmotor, geöffneter Anfahrkupplung, eingestellter Anfahrübersetzung und einer über das Bremspedal betätigten Betriebsbremse aktivierbar ist, bei einem Loslassen des Bremspedals die Betriebsbremse durch ein Halten des zuvor über das Bremspedal eingestellten Bremsdruckes ($p_B$) zunächst geschlossen bleibt und bei einer anschließenden Betätigung des Fahrpedals das Motormoment ($M_M$) des Antriebsmotors angehoben, das Kupplungsmoment ($M_K$) der Anfahrkupplung durch ein Einrücken der Anfahrkupplung erhöht und das Bremsmoment ($M_B$) der Betriebsbremse durch ein Absenken des Bremsdruckes ($p_B$) reduziert wird, wobei ein durch den Fahrer über das Bremspedal eingestelltes Bremsmoment ($M_B$), ein durch den Fahrer über das Fahrpedal angefordertes Beschleunigungsmoment ($M_A$) und ein für das Halten des Kraftfahrzeugs an einer Steigung erforderliches Haltemoment ($M_H$) bestimmt werden, **dadurch gekennzeichnet, dass** das Einrücken der Anfahrkupplung sowie das Lösen der Betriebsbremse derart koordiniert werden, dass während des Lösens der Betriebsbremse die Summe aus dem Kupplungsmoment ($M_K$) und dem Bremsmoment ($M_B$) zu jedem Zeitpunkt dem Haltemoment ($M_H$) entspricht ($M_K + M_B = M_H$), und das Kupplungsmoment ($M_K$) der Anfahrkupplung erst bei weitgehend gelöster Betriebsbremse ($M_B = 0$) um das Beschleunigungsmoment ($M_A$) erhöht wird.

2. Verfahren nach Anspruch 1, **dadurch gekennzeichnet, dass** zur Bestimmung des Bremsmomentes ($M_B$) der Bremsdruck ($p_B$) der Betriebsbremse sensorisch erfasst und daraus mit der Geometrie der Radbremsen ein resultierendes Radbremsmoment ($M_{BR}$) berechnet wird, aus dem mittels der resultierenden Übersetzung ($i_D$) eines Achsund/oder Zentraldifferenzials und der Übersetzung ($i_G$) des Getriebes das auf die Ebene der Anfahrkupplung bezogene Bremsmoment ($M_B$) berechnet wird.

3. Verfahren nach Anspruch 1 oder 2, dadurch **gekennzeich** n e t , dass zur Bestimmung des Beschleunigungsmomentes ($M_A$) die Stellung ($x_{FP}$) und/oder die Stellgeschwindigkeit (d $x_{FP}$/dt) des Fahrpedals sensorisch erfasst, daraus eine angeforderte Fahrzeugbeschleunigung ($a_F$) abgeleitet und damit zusammen mit einer ermittelten Fahrzeugmasse ($m_F$) eine Beschleunigungskraft ($F_A$) berechnet wird, aus der mit dem wirksamen Radius ($r_R$) der Antriebsräder, der resultierenden Übersetzung ($i_D$) des Achs- und/oder Zentraldifferenzials und der Übersetzung ($i_G$) des Getriebes das auf die Ebene der Anfahrkupplung bezogene Beschleunigungsmoment ($M_A$) berechnet wird.

4. Verfahren nach zumindest einem der Ansprüche 1 bis 3, **dadurch gekennzeichnet, dass** zur Bestimmung des Haltemomentes ($M_H$) die Fahrbahnneigung ($\alpha$) und die Fahrzeugmasse ($m_F$) ermittelt, daraus ein Steigungswiderstand ($F_S$) berechnet, und damit zusammen mit einem ermittelten Rollwiderstand ($F_R$) ein Fahrwiderstand ($F_W$) berechnet wird, aus dem mittels des Radius ($r_R$) der Antriebsräder, der resultierenden Übersetzung ($i_D$) des Achs- und/oder Zentraldifferenzials und der Übersetzung ($i_G$) des Getriebes das auf die Ebene der Anfahrkupplung bezogene Haltemoment ($M_H$) berechnet wird.

5. Verfahren nach zumindest einem der Ansprüche 1 bis 4, **dadurch gekennzeichnet, dass** bei einem zu Beginn des Anfahrvorgangs über dem Haltemoment ($M_H$) liegenden Bremsmoment ($M_B$) [$M_B > M_H$] das Einrücken der Anfahrkupplung so lange verzögert wird, bis der Bremsdruck ($p_B$) der Betriebsbremse soweit abgesenkt ist, dass das aktuelle Bremsmoment ($M_B$) in etwa dem Haltemoment ($M_H$) entspricht ($M_B = M_H$).

6. Verfahren nach Anspruch 5, **dadurch gekennzeichnet, dass** die Anfahrkupplung während der Verzögerung des Einrückens bis an den Greif punkt eingerückt wird.

7. Verfahren nach zumindest einem der Ansprüche 1 bis 6, dadurch **g**ekennzeichnet, dass die Anfahrkupplung nach einem vorgegebenen zeitbezogenen Funktionsverlauf eingerückt wird, und dass das Kupplungsmoment ($M_K$) der Anfahrkupplung oder eine die Höhe des Kupplungsmomentes ($M_K$) bestimmende Stellgröße ($x_K$, $p_K$) als Führungsgröße zur Steuerung des Abbaus des Bremsmomentes ($M_B$) der Betriebsbremse verwendet wird.

8. Verfahren nach Anspruch 7, **dadurch gekennzeichnet, dass** bei einer als Trockenkupplung ausgebildeten Anfahrkupplung der Einrückweg ($x_K$) und bei einer als Nasskupplung ausgebildeten Anfahrkupplung der Einrückdruck ($p_K$) als Führungsgröße für den Abbau des Bremsmomentes ($M_B$) der Betriebsbremse verwendet wird.

9. Verfahren nach Anspruch 7 oder 8, dadurch **gekennzeich** n e t , dass während des Abbaus des Bremsmomentes ($M_B$) der Bremsdruck ($p_B$) der Betriebsbremse um einen Sicherheitszuschlag ($\Delta p_{BS}$) erhöht wird.

10. Verfahren nach zumindest einem der Ansprüche 1 bis 6, **dadurch gekennzeichnet, dass** die Betriebsbremse nach einem vorgegebenen zeitbezogenen Funktionsverlauf gelöst wird, und dass das Bremsmoment ($M_B$) oder eine die Höhe des Bremsmomentes ($M_B$) bestimmende Stellgröße ($p_B$) als Führungsgröße zur Steuerung des Aufbaus des Kupplungsmomentes ($M_K$) der Anfahrkupplung verwendet wird.

11. Verfahren nach Anspruch 10, **dadurch gekennzeichnet, dass** der Bremsdruck ($p_B$) der Betriebsbremse als Führungsgröße für den Aufbau des Kupplungsmomentes ($M_K$) der Anfahrkupplung verwendet wird.

12. Verfahren nach Anspruch 10 oder 11, dadurch **gekennzeich**n e t , dass während des Aufbaus des Kupplungsmomentes ($M_K$) bei einer als Trockenkupplung ausgebildeten Anfahrkupplung der Einrückweg ($x_K$) und bei einer als Nasskupplung ausgebildeten Anfahrkupplung der Einrückdruck ($p_K$) um einen Sicherheitszuschlag ($\Delta x_{KS}$, $\Delta p_{KS}$) erhöht wird.

13. Verfahren nach Anspruch 9 oder 12, dadurch **gekennzeich**n e t , dass der Sicherheitszuschlag ($\Delta p_{BS}$, $\Delta x_{KS}$, $\Delta p_{KS}$) mit zunehmendem Kupplungsmoment ($M_K$) der Anfahrkupplung oder mit zunehmender, die Höhe des Kupplungsmomentes ($M_K$) bestimmender Stellgröße ($x_K$, $p_K$) reduziert wird.

14. Verfahren nach zumindest einem der Ansprüche 9 bis 13, **dadurch gekennzeichnet, dass** von den Vorgängen "Aufbau des Kupplungsmomentes ($M_K$) der Anfahrkupplung" und "Abbau des Bremsmomentes ($M_B$) der Betriebsbremse" der langsamer steuerbare Vorgang nach einem vorgegebenen zeitbezogenen Funktionsverlauf und der schneller steuerbare Vorgang in Abhängigkeit des langsamer steuerbaren Vorgangs gesteuert wird.

15. Verfahren nach zumindest einem der Ansprüche 1 bis 14, **dadurch gekennzeichnet, dass** die in dem Getriebe eingestellte Übersetzung ($i_G$) sensorisch erfasst wird, und dass bei einer Ermittlung einer zum Anfahren ungeeigneten Übersetzung ($i_G$) des Getriebes die Betriebsbremse gelöst und der Anfahrmodus beendet wird.

**Claims**

1. Method for starting control of a motor vehicle, the drivetrain of which comprises a drive engine which is formed as an internal combustion engine and can also be actuated automatically via an accelerator pedal, a starting clutch which is formed as an automatic friction clutch, a transmission with an adjustable transmission ratio and a service brake which is formed as a pressurizing medium-activated friction brake and can also be actuated automatically via a brake pedal, wherein in a starting mode of a starting assistance controller which can be activated in the case of a vehicle at a standstill, a running drive engine, open starting clutch, set starting transmission ratio and a service brake which is activated via the brake pedal, in the case of a release of the brake pedal, the service brake remains initially closed by holding the brake pressure ($P_B$) set previously via the brake pedal and, in the case of a subsequent activation of the accelerator pedal, the engine torque ($M_M$) of the drive engine is increased, the clutch torque ($M_K$) of the starting clutch is increased by an engagement of the starting clutch and the braking torque ($M_B$) of the service brake is reduced by lowering the brake pressure ($P_B$), wherein a braking torque ($M_B$) which is set by the driver via the brake pedal, an acceleration torque ($M_A$) demanded by the driver via the accelerator pedal and a holding torque ($M_H$) required for holding the motor vehicle on a gradient are determined, **characterized in that** the engagement of the starting clutch and the release of the service brake are coordinated such that, during the release of the service brake, the sum of the clutch torque ($M_K$) and the braking torque ($M_B$) at all times corresponds to the holding torque ($M_H$) ($M_K + M_B = M_H$), and the clutch torque ($M_K$) of the starting clutch is only increased by the acceleration torque ($M_A$) when the service brake is substantially released ($M_B = 0$).

2. Method according to Claim 1, **characterized in that**, in order to determine the braking torque ($M_B$), the brake pressure ($P_B$) of the service brake is detected by sensors and a resultant wheel braking torque ($M_{BR}$) is calculated therefrom with the geometry of the wheel brakes, from which wheel braking torque ($M_{BR}$) the braking torque ($M_B$) related to the plane of the starting clutch is calculated by means of the resultant transmission ratio ($i_D$) of an axial and/or central differential and the transmission ratio ($i_G$) of the transmission.

3. Method according to Claim 1 or 2, **characterized in that**, in order to determine the acceleration torque ($M_A$), the position ($X_{FP}$) and/or the actuating speed ($d X_{FP}/dt$) of the accelerator pedal is/are detected by sensors, a demanded vehicle acceleration ($a_F$) is derived therefrom and thus, together with a determined vehicle mass ($m_F$), an acceleration force ($F_A$) is calculated from which, with the effective radius ($r_R$) of the drive wheels, the resultant transmission ratio ($i_D$) of the axial and/or central differential and the transmission ratio ($i_G$) of the transmission, the acceleration torque ($M_A$) related to the plane of the starting clutch is calculated.

4. Method according to at least one of Claims 1 to 3, **characterized in that**, in order to determine the holding torque ($M_H$), the carriageway inclination ($\alpha$) and the vehicle mass ($m_F$) are determined, therefrom a climbing resistance ($F_S$) is calculated, and thus, together with a determined rolling resistance ($F_R$), a driving resistance ($F_W$) is calculated from which the holding torque ($M_H$) related to the plane of the starting clutch is calculated by means of the radius ($r_R$) of the drive wheels, the resultant transmission ratio ($i_D$) of the axial and/or central differential and the transmission ratio ($i_G$) of the transmission.

5. Method according to at least one of Claims 1 to 4, **characterized in that**, in the case of a braking torque ($M_B$) which is greater than the holding torque ($M_H$) at the start of the starting operation [$M_B > M_H$], engagement of the starting clutch is delayed until the brake pressure ($P_B$) of the service brake is lowered so far that the current braking torque ($M_B$) approximately corresponds to the holding torque ($M_H$) ($M_B = M_H$).

6. Method according to Claim 5, **characterized in that** the starting clutch is engaged until the biting point during the delay of engagement.

7. Method according to at least one of Claims 1 to 6, **characterized in that** the starting clutch is engaged after a defined time-related functional profile and that the clutch torque ($M_K$) of the starting clutch or an actuating variable ($X_K$, $P_K$) which determines the level of the clutch torque ($M_K$) is used as a command variable for controlling the reduction in the braking torque ($M_B$) of the service brake.

8. Method according to Claim 7, **characterized in that**, in the case of a starting clutch formed as a dry clutch, the engagement travel ($X_K$) and, in the case of a starting clutch formed as a wet clutch, the engagement pressure ($P_K$) is used as a command variable for the reduction in the braking torque ($M_B$) of the service brake.

9. Method according to Claim 7 or 8, **characterized in that**, during the reduction in the braking torque ($M_B$), the brake pressure ($P_B$) of the service brake is increased by an additional safety margin ($\Delta P_{BS}$).

10. Method according to at least one of Claims 1 to 6, **characterized in that** the service brake is released after a defined time-related functional profile and that the braking torque ($M_B$) or an actuating variable ($P_B$) which determines the level of the braking torque ($M_B$) is used as a command variable for controlling the build-up of the clutch torque ($M_K$) of the starting clutch.

11. Method according to Claim 10, **characterized in that** the brake pressure ($P_B$) of the service brake is used as a command variable for the build-up of the clutch torque ($M_K$) of the starting clutch.

12. Method according to Claim 10 or 11, **characterized in that**, during the build-up of the clutch torque ($M_K$), in the case of a starting clutch formed as a dry clutch, the engagement travel ($X_K$) and, in the case of a starting clutch formed as a wet clutch, the engagement pressure ($P_K$) is increased by an additional safety margin ($\Delta X_{KS}$, $\Delta P_{KS}$).

13. Method according to Claim 9 or 12, **characterized in that** the additional safety margin ($\Delta P_{BS}$, $\Delta X_{KS}$, $\Delta P_{KS}$) is reduced with increasing clutch torque ($M_K$) of the starting clutch or with an increasing actuating variable ($X_K$, $P_K$) which determines the level of the clutch torque ($M_K$).

14. Method according to at least one of Claims 9 to 13, **characterized in that**, of the operations "Build-up of the clutch torque ($M_K$) of the starting clutch" and "Reduction in the braking torque ($M_B$) of the service brake", the operation which can be controlled more slowly is controlled according to a defined time-related functional profile and the operation which can be controlled more quickly is controlled as a function of the operation which can be controlled more slowly.

15. Method according to at least one of Claims 1 to 14, **characterized in that** the transmission ratio ($i_G$) set in the transmission is detected by sensors and that the service brake is released and the starting mode is terminated on determination of a transmission ratio ($i_G$) of the transmission which is unsuitable for starting.

**Revendications**

1. Procédé de commande du démarrage d'un véhicule automobile, dont la chaîne cinématique comprend un moteur d'entraînement réalisé sous la forme d'un moteur à combustion interne et pouvant être commandé non seulement par le biais d'une pédale d'accélération mais aussi de manière automatisée, un embrayage de démarrage réalisé sous la forme d'un embrayage à friction automatisé, une boîte de vitesses à rapport de transmission réglable ainsi qu'un frein de service réalisé sous la forme d'un frein à friction actionné par un fluide sous pression et pouvant être commandé non seulement par le biais d'une pédale de frein mais aussi de manière automatisée, dans un mode de démarrage d'une commande d'aide au démarrage, qui peut être activé à l'arrêt du véhicule, lorsque le moteur d'entraînement tourne, que l'embrayage de démarrage est ouvert, que la transmission de démarrage est ajustée, et qu'un frein de service est actionné par le biais de la pédale de frein, en cas de relâchement de la pédale de frein, le frein de service restant tout d'abord fermé par le maintien de la pression de freinage ($p_B$) ajustée préalablement par le biais de la pédale de frein et en cas d'actionnement subséquent de la pédale d'accélération, le couple moteur ($M_M$) du moteur d'entraînement étant augmenté, le couple d'embrayage ($M_K$) de l'embrayage de démarrage étant accru en embrayant l'embrayage de démarrage, et le couple de freinage ($M_B$) du frein de service étant réduit par la réduction de la pression de freinage ($p_B$), un couple de freinage ($M_B$) ajusté par le conducteur par le biais de la pédale de frein, un couple d'accélération ($M_A$) demandé par le conducteur par le biais de la pédale d'accélération et un couple de maintien ($M_H$) requis pour maintenir le véhicule automobile en position en pente étant déterminés, **caractérisé en ce que** l'embrayage de l'embrayage de démarrage ainsi que le relâchement du frein de service sont coordonnés de telle sorte que pendant le relâchement du frein de service la somme du couple d'embrayage ($M_K$) et du couple de freinage ($M_B$) corresponde à tout instant au couple de maintien ($M_H$) ($M_K + M_B = M_H$), et que le couple d'embrayage ($M_K$) de l'embrayage de démarrage soit augmenté du couple d'accélération ($M_A$) seulement lorsque le frein de service est sensiblement desserré ($M_B = 0$).

2. Procédé selon la revendication 1, **caractérisé en ce que** pour déterminer le couple de freinage ($M_B$), la pression de freinage ($p_B$) du frein de service est détectée par capteur et un couple de freinage de roue ($M_{BR}$) en résultant est calculé à partir de celle-ci et de la géométrie des freins de roues, à partir duquel couple de freinage résultant, le couple de freinage ($M_B$) rapporté au plan de l'embrayage de démarrage est calculé au moyen du rapport de transmission résultant ($i_D$) d'un différentiel d'essieu et/ou central et du rapport de transmission ($i_G$) de la boîte de vitesses.

3. Procédé selon la revendication 1 ou 2, **caractérisé en ce que** pour déterminer le couple d'accélération ($M_A$), la position ($x_{FP}$) et/ou la vitesse de commande (d $x_{FP}$/dt) de la pédale d'accélération sont détectées par capteur, une accélération demandée du véhicule ($a_F$) en est déduite et une force d'accélération ($F_A$) est calculée à partir de celles-ci et d'une masse déterminée du véhicule ($m_F$), à partir de laquelle force d'accélération, conjointement avec le rayon efficace ($r_R$) des roues d'entraînement, le rapport de transmission résultant ($i_D$) du différentiel d'essieu et/ou central et le rapport de transmission ($i_G$) de la boîte de vitesses, le couple d'accélération ($M_A$) rapporté au plan de l'embrayage de démarrage est calculé.

4. Procédé selon au moins l'une quelconque des revendications 1 à 3, **caractérisé en ce que** pour déterminer le couple de maintien ($M_H$), on détermine la pente de la voie de circulation ($\alpha$) et la masse du véhicule ($m_F$), à partir de celles-ci on calcule une résistance de montée ($F_S$) et l'on calcule avec celle-ci, conjointement avec une résistance au roulage déterminée ($F_R$), une résistance de conduite ($F_W$), à partir de laquelle, au moyen du rayon ($r_R$) des roues d'entraînement, du rapport de transmission résultant ($i_D$) du différentiel d'essieu et/ou central et du rapport de transmission ($i_G$) de la boîte de vitesses, le couple de maintien ($M_H$) rapporté au plan de l'embrayage de démarrage est calculé.

5. Procédé selon au moins l'une quelconque des revendications 1 à 4, **caractérisé en ce que** pour un couple de freinage ($M_B$) au début de l'opération de démarrage situé au-dessus du couple de maintien ($M_H$) [($M_B > M_H$)], l'embrayage de l'embrayage de démarrage est retardé jusqu'à ce que la pression de freinage ($p_B$) du frein de service ait diminué dans une mesure telle que le couple de freinage actuel ($M_B$) corresponde approximativement au couple de maintien ($M_H$) ($M_B = M_H$).

6. Procédé selon la revendication 5, **caractérisé en ce que** l'embrayage de démarrage, pendant le retard de l'embrayage, est embrayé jusqu'au point d'engagement.

7. Procédé selon au moins l'une quelconque des revendications 1 à 6, **caractérisé en ce que** l'embrayage de démarrage est embrayé selon une courbe de fonction prédéfinie en fonction du temps, et **en ce que** le couple d'embrayage ($M_K$) de l'embrayage de démarrage ou une grandeur de réglage ($x_K$, $p_K$) déterminant l'amplitude du couple d'embrayage ($M_K$) est utilisé (e) en tant que grandeur directrice pour commander la réduction du couple de freinage ($M_B$) du frein de service.

**8.** Procédé selon la revendication 7, **caractérisé en ce que** l'on utilise, en tant que grandeur directrice pour la réduction du couple de freinage ($M_B$) du frein de service, la course d'embrayage ($x_K$) lorsque l'embrayage de démarrage est réalisé sous forme d'embrayage sec, et la pression d'embrayage ($p_K$) lorsque l'embrayage de démarrage est réalisé sous forme d'embrayage humide.

**9.** Procédé selon la revendication 7 ou 8, **caractérisé en ce que** pendant la réduction du couple de freinage ($M_B$) la pression de freinage ($p_B$) du frein de service est augmentée d'une marge de sécurité ($\Delta p_{BS}$).

**10.** Procédé selon au moins l'une quelconque des revendications 1 à 6, **caractérisé en ce que** le frein de service est relâché en fonction d'une courbe de fonction prédéfinie en fonction du temps, et **en ce que** le couple de freinage ($M_B$) ou une grandeur de réglage ($p_B$) déterminant l'amplitude du couple de freinage ($M_B$) sont utilisés comme grandeur directrice pour la commande de l'augmentation du couple d'embrayage ($M_K$) de l'embrayage de démarrage.

**11.** Procédé selon la revendication 10, **caractérisé en ce que** la pression de freinage ($p_B$) du frein de service est utilisée comme grandeur directrice pour l'augmentation du couple d'embrayage ($M_K$) de l'embrayage de démarrage.

**12.** Procédé selon la revendication 10 ou 11, **caractérisé en ce que** pendant l'augmentation du couple d'embrayage ($M_K$), on augmente la course d'embrayage ($x_K$) lorsque l'embrayage de démarrage est réalisé sous forme d'embrayage sec, et la pression d'embrayage ($p_K$) lorsque l'embrayage de démarrage est réalisé sous forme d'embrayage humide, d'une marge de sécurité ($\Delta x_{KS}$, $\Delta p_{KS}$).

**13.** Procédé selon la revendication 9 ou 12, **caractérisé en ce que** la marge de sécurité ($\Delta p_{BS}$, $\Delta x_{KS}$, $\Delta p_{KS}$) est réduite avec un couple d'embrayage ($M_K$) croissant de l'embrayage de démarrage ou avec une grandeur de réglage ($X_K$, $p_K$) croissante, déterminant l'amplitude du couple d'embrayage ($M_K$).

**14.** Procédé selon au moins l'une quelconque des revendications 9 à 13, **caractérisé en ce que** parmi les opérations "augmentation du couple d'embrayage ($M_K$) de l'embrayage de démarrage" et "réduction du couple de freinage ($M_B$) du frein de service", l'opération pouvant être commandée plus lentement est commandée en fonction d'une courbe de fonction prédéfinie en fonction du temps et l'opération pouvant être commandée plus rapidement est commandée en fonction de l'opération pouvant être commandée plus lentement.

**15.** Procédé selon au moins l'une quelconque des revendications 1 à 14, **caractérisé en ce que** le rapport de transmission ($i_G$) ajusté dans la boîte de vitesses est détecté par capteur et **en ce que** dans le cas d'une détermination d'un rapport de transmission ($i_G$) de la boîte de vitesses inadapté au démarrage, le frein de service est desserré et le mode de démarrage est terminé.

Fig. 1

Fig. 2

14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10244024 A1
- EP 1447261 A1
- DE 102004045434 A1
- DE 102004017703 A1
- DE 102005001550 A1